# EUROPEAN PATENT SPECIFICATION

(11) **EP 2 289 182 B1**
(45) Date of publication and mention of the grant of the patent: **25.01.2012**
(21) Application number: 08735579.8
(22) Date of filing: 28.03.2008
(51) Int. Cl.: H04J 3/16, H04J 14/02

(54) **DEMULTIPLEXING AND MULTIPLEXING METHOD AND APPARATUS**
VERFAHREN UND VORRICHTUNG ZUM DEMULTIPLEXEN UND MULTIPLEXEN
PROCÉDÉ ET APPAREIL DE DÉMULTIPLEXAGE ET DE MULTIPLEXAGE

(30) Priority: 03.01.2008 EP 08100045
(43) Date of publication of application: 02.03.2011
(73) Proprietor: Telefonaktiebolaget L M Ericsson (publ), 164 83 Stockholm (SE)
(72) Inventor: CECCATELLI, Riccardo, I-56100 Pisa (IT); DELLA VALLE, Emanuele, I-17031 Albenga (SV) (IT); BAJANO, Marco, I-16136 Genoa (IT)
(74) Representative: Chisholm, Geoffrey David
(86) International application number: PCT/EP2008/053756
(87) International publication number: WO 2009/083277

(56) References cited:
- EP-A- 1 221 798
- WO-A-2006/009732
- US-A1- 2002 018 468
- US-B1- 6 272 128

## Description

### TECHNICAL FIELD

This disclosure relates to multiplexing and demultiplexing optical signals from one bit rate to a different bit rate or data rate.

### BACKGROUND

Dense wavelength division multiplexing (DWDM) technology is typically used in core optical networks for transporting voice, data, and multimedia traffic. Local networks may be based on different technology such as SDH (Synchronous Digital Hierarchy), SONET (Synchronous Optical Networking), and PoS (Packet over SONET). Whilst existing OTN (Optical Transport Network) core networks utilising DWDM technology are designed for supporting STM-64/0C-192 (10G bit rate or data rate), newer technologies applied to local networks may support 40G data rates. Access to core networks from a local network is normally based on particular interfaces fitted to routers which provide suitable adaptations. The capacity of router ports have recently increased up to 40G using PoS technology (STM-256C/OC-768c). From a local network operator's view, this represents an advantage because it allows the reduction of the number of ports on the router. However, because existing OTN core networks are designed for supporting STM-64/OC-192 (10G data rate); they are not suitable for directly accepting these 40G signals.

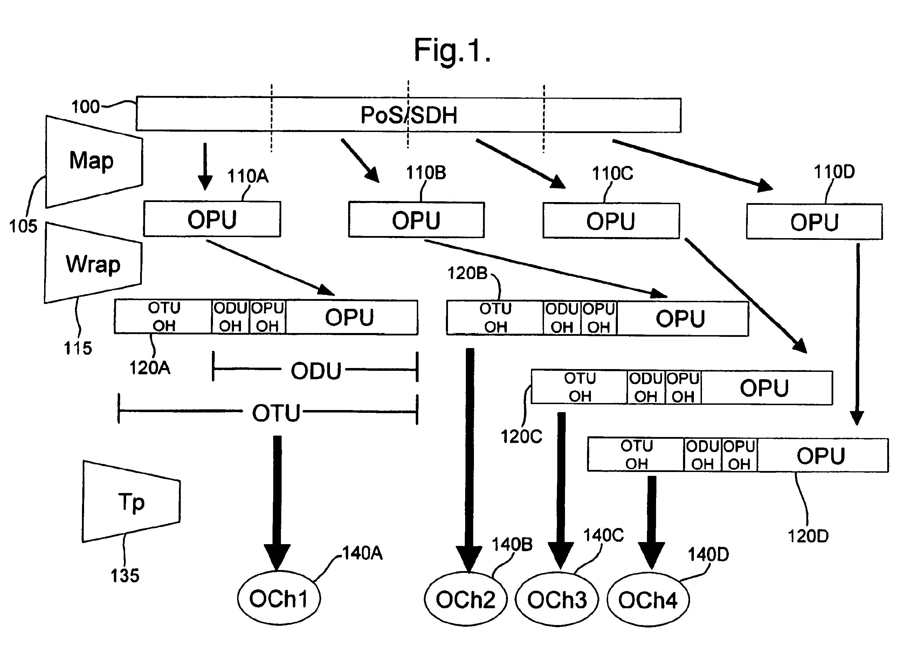

Existing OTN technology allows for demultiplexing higher rate signals by mapping the higher rate signal into transport containers, adding a digital overhead wrapper to each transport container, and transmitting these digitally wrapped transport containers separately. This process is illustrated in Figure 1, which shows a PoS frame 100, mapped into four optical payload units (OPU) 110A-D, by a mapping function 105. Each OTU 100A-D is digitally wrapped by a digital wrapping function 115, which adds an OPU overhead, as optical data unit (ODU) overhead, and an optical transport unit (OTU) overhead to form an OTU 120A-D. These OTU's 120A-D are forwarded to respective transponders 135 for transmitting as separate optical signals on respective optical channels (OCh1-4) 140A-D having different wavelengths. OTN technology will be familiar to those skilled in the art and more information can be found in ITU-T (International Telecommunications Union) recommendation G.872 and G.709. Multiplexing and demultiplexing are outlined in Section 9.8 of Recommendation G.872 and Clause 18.2.1.2 of Recommendation G.709. Example implementations can be found for example in WO2006/009732 and EP1221798.

### SUMMARY

There is provided a method of demultiplexing client data from a constant bit rate (CBR) optical client serial link into lower bit rate CBR signals for transmitting over a plurality of wavelength division multiplexed (WDM) optical channels. The method comprises generating a plurality of CBR transport frames for transmitting a client frame received from the optical client serial link over respective WDM optical channels. Mapping blocks of bytes from the client frame into respective CBR transport frames for transmitting over the respective WDM optical channel, wherein the number of bytes in the client frame is the same as the number of bytes in the plurality of respective CBR transport frames. Modifying a number of non-payload bytes from the client frame to carry CBR transport frame control data in each of the CBR transport frames.

Modifying some of the non-payload bytes from the client frame to carry CBR transport frame control data allows the payload bytes of the client frame together with overhead data for the WDM optical channels to be carried in the same number of bytes as the received client frame. By selecting appropriate byte locations within the client frame for the CBR transport frame control data, client frame control data (non-payload) need not be transported separately. For example, unused byte locations may be used, or byte locations containing client frame control data which is easily replicated at the receiver. An example of this type of client frame control rate data is the frame alignment bytes of a 40G PoS client frame. This arrangement allows the signal from the optical client serial link to be demultiplexed into the WDM optical channels without using extra bytes. This compares with the OTN demultiplexing approach which would require additional bytes for the digital wrappers for each transport container. Thus the bytes from the client frame can be divided into OTN sized frames, but with no additional bytes required to carry overhead information for the WDM optical channels. For example a 40G PoS signal can be demultiplexed into only four 10G WDM optical channels whilst maintaining the same overall bit rate or data rate. This reduces the delay in adapting signals from one network into the other, and additionally reduces the signal processing load required when compared with the digital wrapping functions used in the standard OTN method illustrated in Figure 1. Thus simpler and cheaper hardware may be utilised using the provided demultiplexing method.

The method may be implemented as a computer programme, running on an appropriate computer such as a DSP (digital signal processor) core, or a more general purpose processor. The computer programme may be carried on any suitable computer readable media such as a CD-ROM or a download signal for example. Alternatively, the method may be implemented on an ASIC (application specific integrated circuit) or a FPGA (field programmable gate array).

There is also provided a corresponding multiplexing method and hardware for implementing these demultiplexing and/or multiplexing methods.

### BRIEF DESCRIPTION OF THE DRAWINGS

Embodiments will now be described with reference to the following drawings, by example only and without intending to be limiting, in which;
Figure 1 illustrates a method of demultiplexing a PoS signal using known OTN technology;
Figure 2 is a schematic of a communication system according to an embodiment;
Figure 3 illustrates a method of demultiplexing and transmission according to an embodiment;
Figure 4 illustrates demultiplexing a PoS signal according to an embodiment;
Figure 5 illustrates modifying non-payload bytes in the PoS frame of Figure 4;
Figure 6 illustrates placement of the modified non-payload bytes in each CBR transport frame according to an embodiment;
Figures 7a-d illustrates CBR transport frames for four respective WDM optical channels according to an embodiment;
Figure 8 illustrates a constant bit rate transport frame (CBR TF) control data byte according to an embodiment;
Figure 9 illustrates demultiplexing a PoS frame and providing a protection channel according to an embodiment;
Figure 10 shows the architecture of a multiplexing/demultiplexing card according to an embodiment for implementing the method of Figure 3;
Figure 11 illustrates a method of receiving and multiplexing signals from a plurality of DWM optical channels according to an embodiment;
Figure 12 illustrates the multiplexing of CBR transport frames into a PoS signal according to an embodiment; and
Figure 13 illustrates a multiplexing/demultiplexing card according to another embodiment for implementing the methods of Figures 3 and 11

### DETAILED DESCRIPTION

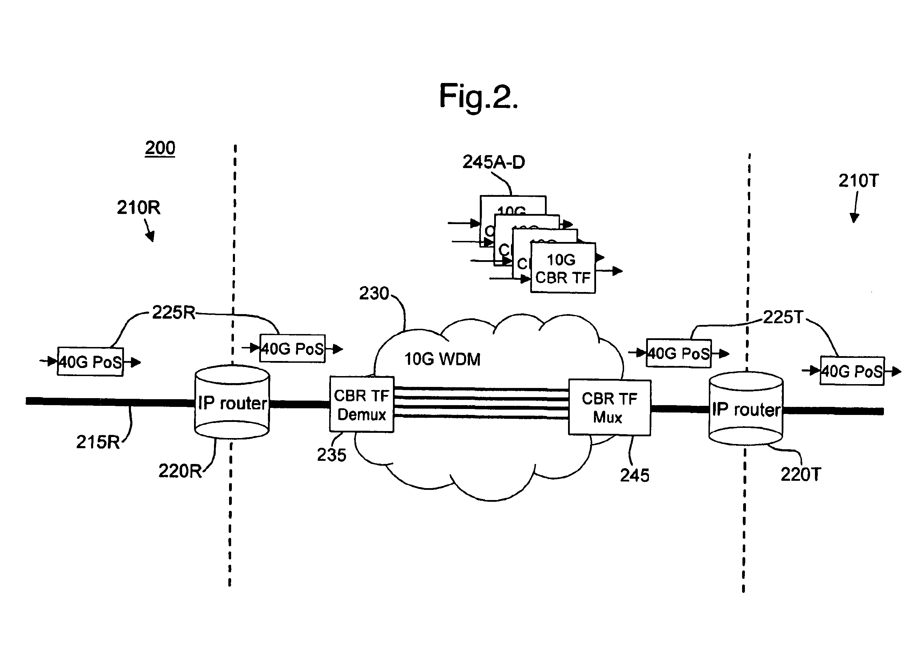

Referring to Figure 2, a communication system according to an embodiment is shown. The communication system 200 comprises a core network 230 coupled to local networks generally referenced as 210R and 210T. For simplicity of explanation, a signal is shown as being received from a first local network 210R, transported across the core network 230, and transmitted over a second local network 210T. However, it will be appreciated that a signal could be propagated in the reverse direction. Each local network 210R and 210T terminates in an IP router 220R and 220T respectively. These routers 220R and 220T route signals 225R and 225T to and from the core network 230 respectively. The signals 225R and 225T in the local networks 210R and 210T are 40G PoS signals in this embodiment; however, other types of 40G data rate signals could alternatively be used. Whilst the local networks 210R and 210T support STM-256/OC-768 signals, the core network 230 operates at a lower data rate supporting STM-64/OC-192 signals.

The core network 230 is implemented using wave division multiplexing (WDM) such as DWDM or coarse WDM (CWDM) and provides a 10G data rate across each wavelength. The core network 230 may comprise a network of fibre optic cable together with various nodes not explicitly shown for simplicity and receives 40G PoS signals 225R over a constant bit rate (CBR) optical client serial link 215R from the IP router 220R coupled to the first local network 210R. The core network also transmits 40G PoS signals 225T over a second CBR optical client serial link 215T to the router 220T coupled to the second local network 210T. The core network 230 also comprises a constant bit rate (CBR) transport frame (TF) demultiplexer 235 coupled to the first optical client serial link 215R and a CBR TF multiplexer 245 coupled to the second optical client serial link 215T. The CBR TF demultiplexer 235 demultiplexes received 40G PoS signals 225R into a plurality of lower bit rate CBR signals 245A-D each at a bit rate of 10G. Each 10G CBR signal 245A-D is transmitted across a separate respective wavelength optical channel of the core network 230. These 10G CBR signals 245A-D are received and multiplexed together by the CBR TF multiplexer 245 and transmitted as 40G PoS signals 225T onto the second optical client serial link 215T. These transmitted 40G PoS signals 225T are received by the second IP router 220T and routed and transmitted over the second local network 210T.

Whilst for simplicity a separate demultiplexer 235 and multiplexer 245 have been described, typically both demultiplexing and multiplexing functions (235 and 245) will be performed on either side of the core network 230 in order to transport higher bit rate signals (40G PoS) in either direction across the core network 230. Similarly, whilst the embodiment has been described with respect to 40G PoS signals, other STM-256/OC-768 signals can also be supported. Furthermore, whilst the embodiment has been described with respect to 40G bit rate local networks 210R and 210T, and a 10G bit rate WDM core network 230, the principles of the embodiment may also be applied to different bit rates on both the local and core networks. For example, local network signals at 120G bit rate may be transported across a 10G WDM core network utilising more wavelengths, or a 40G WDM core network. Similarly, lower bit rate local networks at, for example, 10G may be transported across a 2.5G WDM core network.

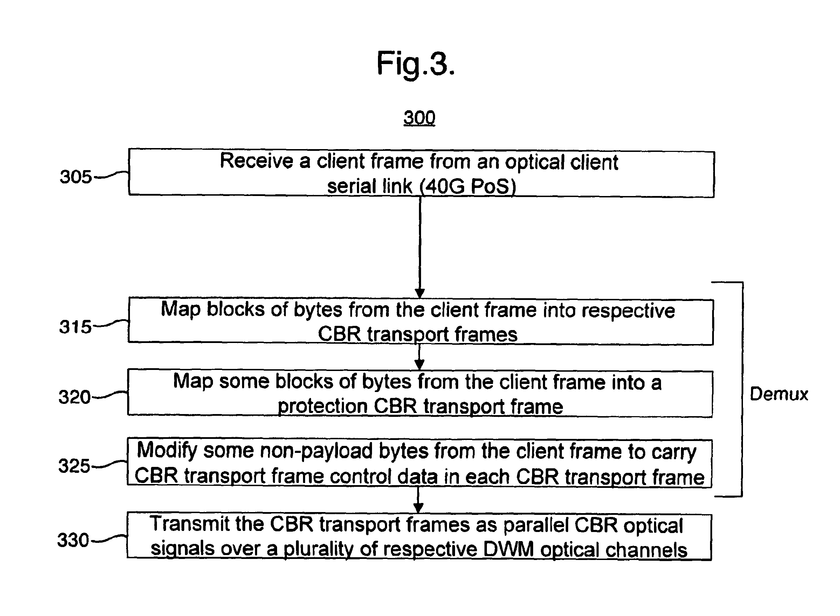

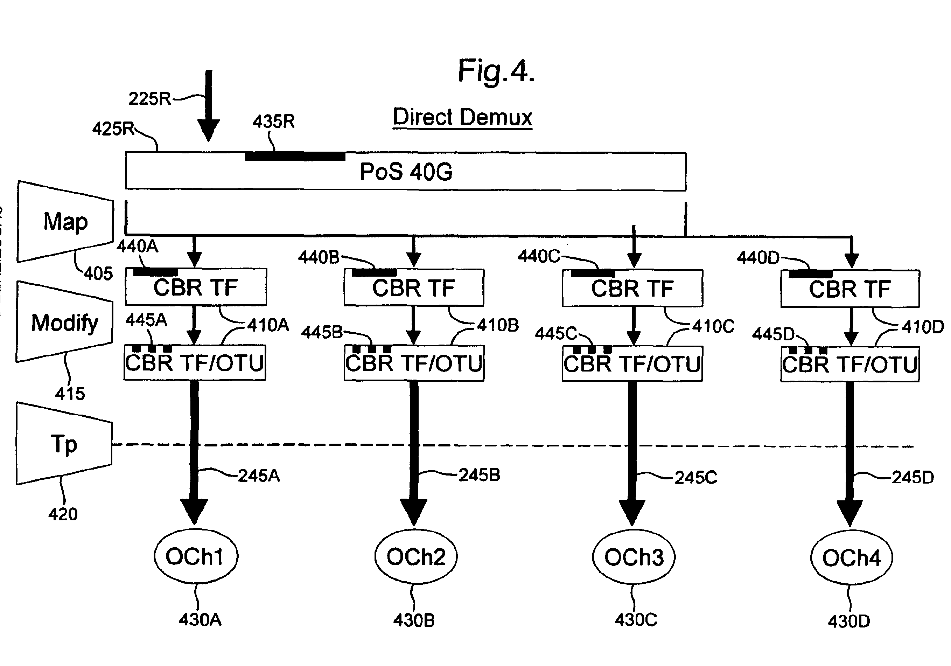

Figures 3 and 4 illustrate in more detail a method of demultiplexing client data from a CBR optical client serial link such as that shown in Figure 2 (215R) into lower bit rate CBR signals (245A-D) for transmitting over a plurality of wavelength division multiplexed (WDM) optical channels of a core network (230). The demultiplexing method may be implemented on a FPGA (Field Programmable Gate Array) embedded within a multiplexer/demultiplexer card or other hardware for integration into a WDM optical network 230.

The demultiplexer 235 receives a client frame from the optical client serial link (215R) at step 305. In this embodiment the client frame is a 40G PoS frame 425R as illustrated in Figure 4. A 40G PoS frame 425R comprises a number of payload bytes for client data together with overhead bytes for communications control. The overhead bytes include a frame alignment section 435R. The demultiplexer 235 maps blocks of bytes from the client frame 425R into respective CBR transport frames 410A-D at step 315. Four CBR transport frames 410A-D are used in this embodiment and are illustrated in Figure 4.

Step 315 may be carried out by a mapping function 405 within the demultiplexer 235 and which maps one quarter of the 40G PoS client frame bytes into each CBR transport frame 410A-D. As can be seen, some of the frame alignment bytes 435R are mapped into each CBR transport frame as indicated by 440A-D respectively.

Step 320 will be described in more detail below. The demultiplexer 235 then modifies some non-payload bytes from the client frame to carry CBR transport frame control data in each CBR transport frame at step 325. This step may be carried out by a modify function 415 in the demultiplexer and is indicated by modified bytes 445A-D in respective CBR transport frames 410A-D. The CBR transport frames 410A-D are the same size as optical transport units (OTU) from OTN technology, and may therefore be sent directly to an OTN transponder 420 for conversion into the optical domain as 10G optical signals 245A-245D. These optical domain signals 245A-D are transmitted over respective optical channels 430A-D of the WDM core network 230. This process results in the transmission of the CBR transport frames as parallel CBR optical signals 245A-D over a plurality of respective WDM optical channels at step 330.

Whilst the embodiment has been described with respect to 40G PoS client frames and four respective CBR transport frames 410A-D, different types and data rate client frames could also be accommodated with suitable modifications. Similarly different numbers of CBR transport frames could be used for mapping the client frame. This may even include the possibility of using CBR transport frames which do not match the size of OTU frames. These CBR transport frames may be accommodated using OTN demultiplexing and digital wrapping. As a further alternative, the CBR transport frames provided may be smaller than the client frame resulting in the client frame being transmitted over two or more optical channel time periods and utilising suitable buffering at the receiver and multiplexer side of the core network.

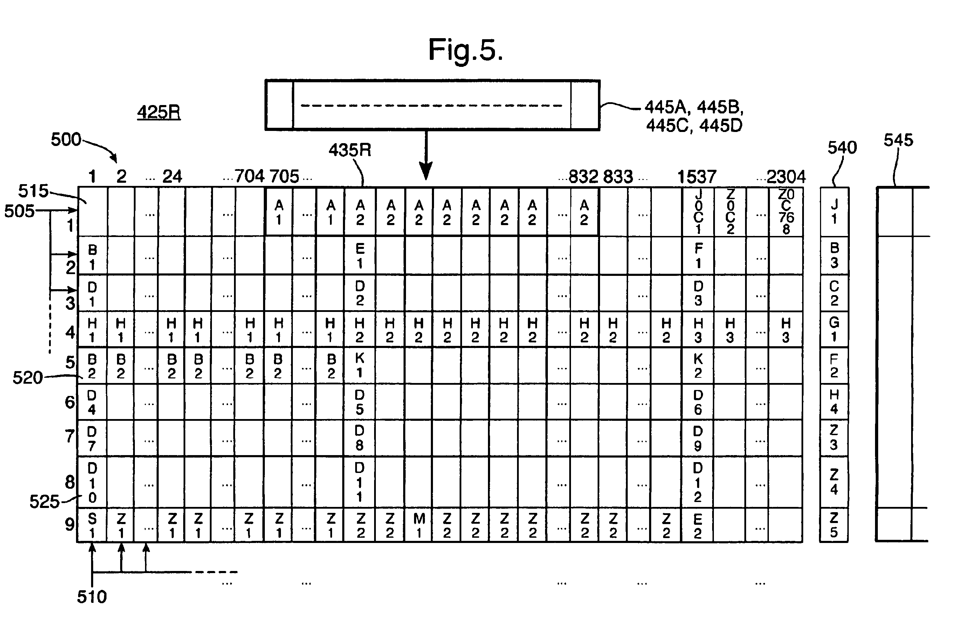

Figure 5 illustrates a 40G PoS frame in more detail and showing the frame alignment section or bytes 435R. These frame alignment bytes 435R comprises the non-payload bytes which are modified in the demultiplexing method 300 of this embodiment. These frame alignment bytes 435R are replaced by CBR transport frame control data 445A-D as illustrated. Using the frame alignment bytes 435R to carry the CBR transport frame control data is advantageous because the frame alignment bytes 435R are defined by standard and can therefore be easily regenerated at the receiver. Therefore no information about these frame alignment bytes needs to be carried across the core network 230. Figure 5 also illustrates other overhead bytes of a 40G PoS frame including undefined bytes 515, bytes which are defined and used by PoS 520 (light grey), and bytes which are defined but not used by PoS 525 (dark grey). Also shown are the payload bytes or client data 545 and the payload overhead bytes 540. As can be seen the overhead and payload bytes of each 40G PoS frame are arranged into rows 505 and columns 510. In alternative embodiments different non-payload bytes may be used to accommodate the CBR transport frame control data 445A-D. For example, the defined, but not used by PoS bytes 525 (dark grey). Using the frame alignment bytes however obviates any implementation issues which may arise should the different non-payload bytes be allocated for a different use in future PoS technology.

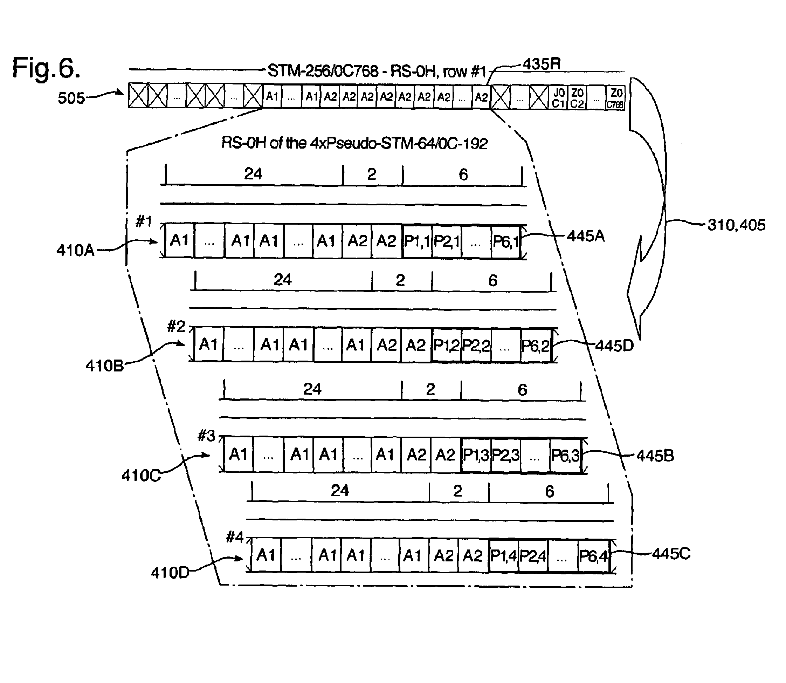

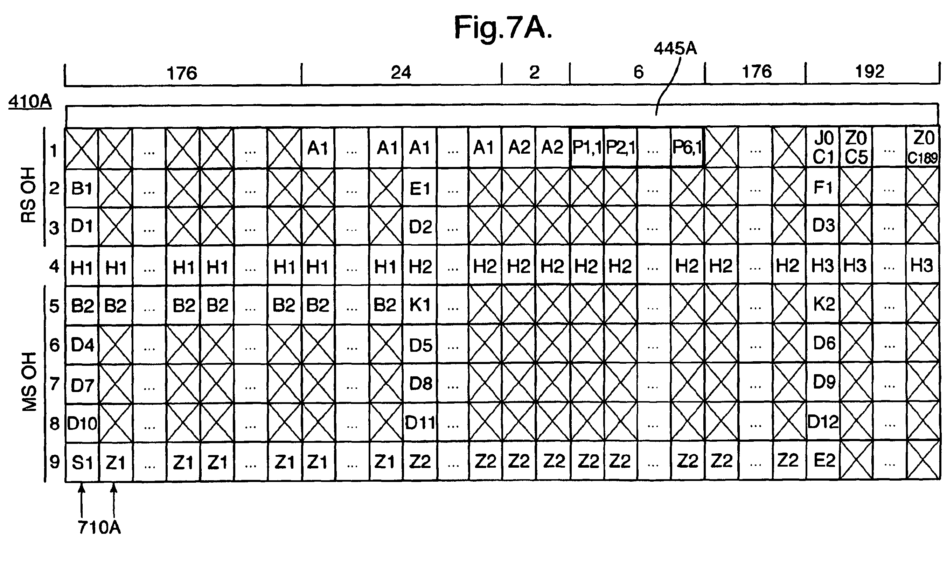

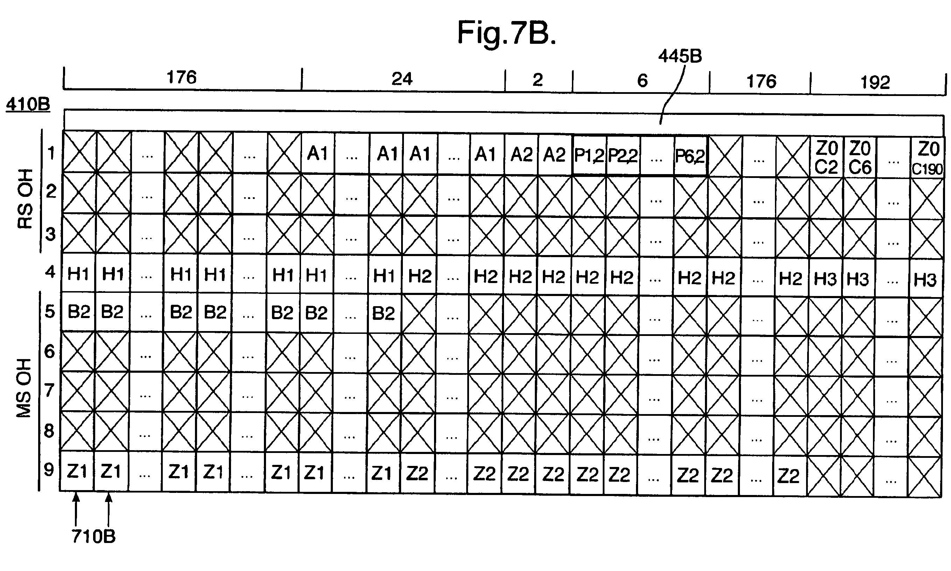

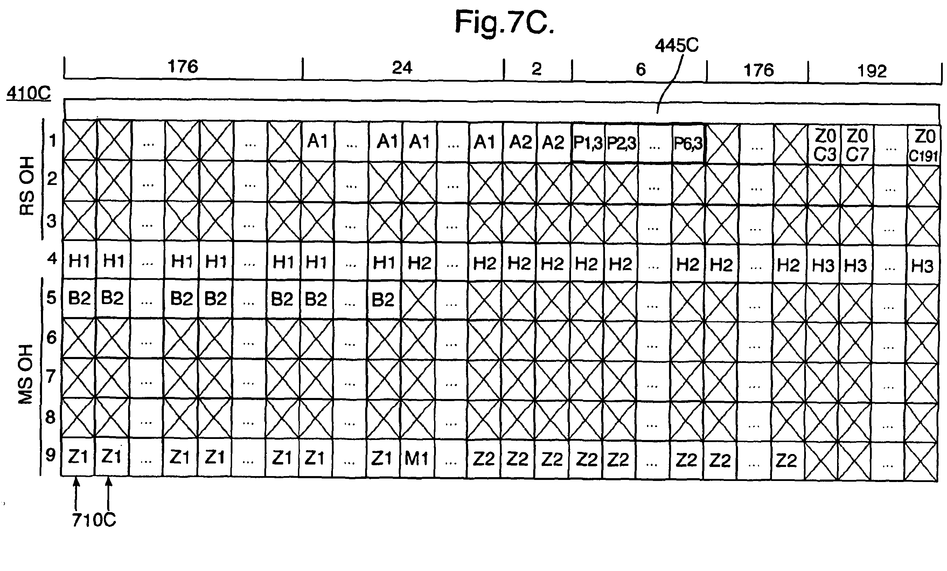

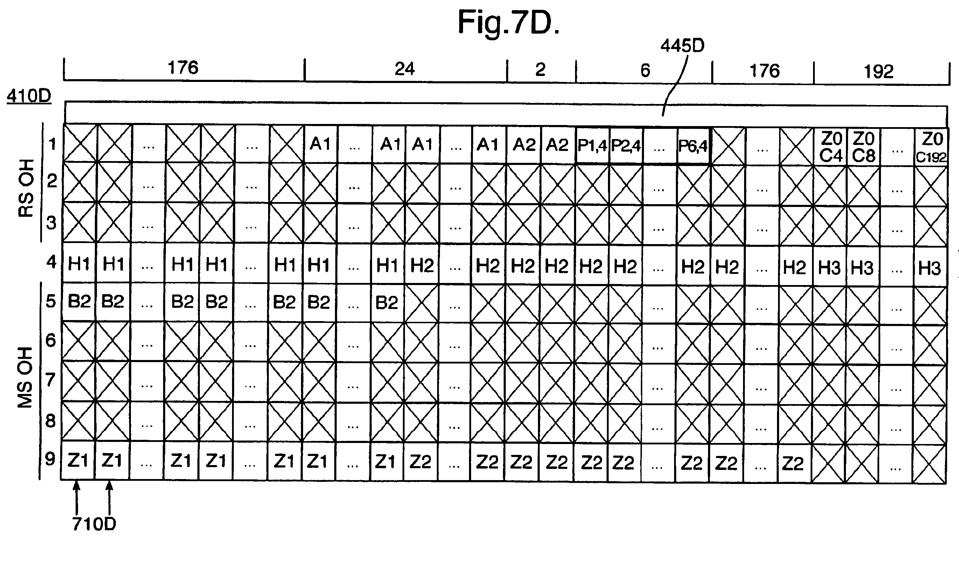

The mapping of blocks of bytes from the client frame 425R into the CBR transport frames 410A-D may be achieved in various ways. In an embodiment, the blocks of bytes are individual columns 510 from the client frame 425R, which are mapped cyclically into the respective CBR transport frames 410A-D. For example, column one is mapped into the first CBR transport frame 410A, column two from the client frame 525R is mapped into the second CBR transport frame 410B, the third column is mapped into the third CBR transport frame 414C, column four is mapped into the fourth CBR transport frame, column five is then mapped into the first CBR transport frame 410A, and so on until the last column in the client frame 425R is mapped into the fourth CBR transport frame. This method of mapping blocks of bytes is partially illustrated in Figure 6, which shows how bytes from the frame alignment bytes 435R are mapped into each CBR transport frame 410A-D. Figure 6 shows the first row and columns 705 to 832 of a 40G PoS frame which comprises the frame alignment section or bytes 435R. The first byte of the frame alignment section 435R is mapped into the first CBR transport frame 410A as indicated, then every fourth byte from this frame alignment section 435R is also mapped into this first CBR transport frame 410A as shown until column 829. Bytes from the frame alignment section 435R corresponding to columns 809 to 829 of the first CBR transport frame 410A are modified to carry respective C13R transport frame control data 445A. A similar process is repeated for CBR transport frames 410B-D as illustrated. Figures 7A-D show all of the overhead bytes from the 40G PoS client frame mapped into respective CBR transport frames 410A-D. This includes all rows 1-9 and the modified bytes carrying CBR transport frame control data 445A-D respectively in each CBR transport frame 410A-410D. Blocks of bytes or columns 710A-D from respective CBR transport frames 410A-D are also shown.

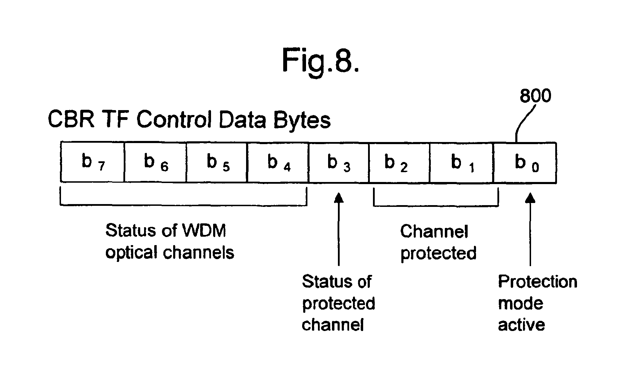

Figure 8 illustrates a byte from the CBR transport frame control data 445A-D used each CBR transport frame 410A-D. In this embodiment, six bytes 800 are used for the CBR transport frame control data, however for simplicity only the first of these bytes is illustrated. Bits b₇-b₄ of the first constant bit rate transport frame (CBR TF) byte indicate the status of each 10G worker signal - 1=on, 0=off. Bit b₃ indicates the status of a 10G protection signal which will be described in more detail below - 1=on, 0=off. Bits b₂ and b₁ indicate which working channel is protected - 01=ch1, 10=ch2, 11=ch3, 00=ch4. Bit b₀ indicates whether protection mode is active - not protected =0, protected =1.

Bits b₇-b₅ of the second CBR transport frame control data byte indicate the channel number - 001=ch1, 010=ch2, 011=ch3, 100=ch4, 000=ch protection. Bits b₄ and b₃ convey information for the Link Loss Forwarding (LLF) management by inserting a Forward Incoming Client Fold (FCIF) indication. When an FCIF is recognised at the receiver a consequential action can be performed. 01=FCIF present, 00=FCIF not present, 10 and 11 are unused. The last three bits b₂-b₀ are unused in this embodiment. Similarly, CBR transport frame control data byte 3 is unused in this embodiment.

CBR transport frame control data bytes 4-6 are used for performance monitoring of each optical channel 430A-D. This embodiment employs bit interleaved parity x 24 code (BIPx24) using even plurality. The BIPx24 is computed over all bits of the previous CBR transport frame after scrambling, and is placed in CBR transport frame control data bytes 4, 5 and 6 of the current frame before scrambling.

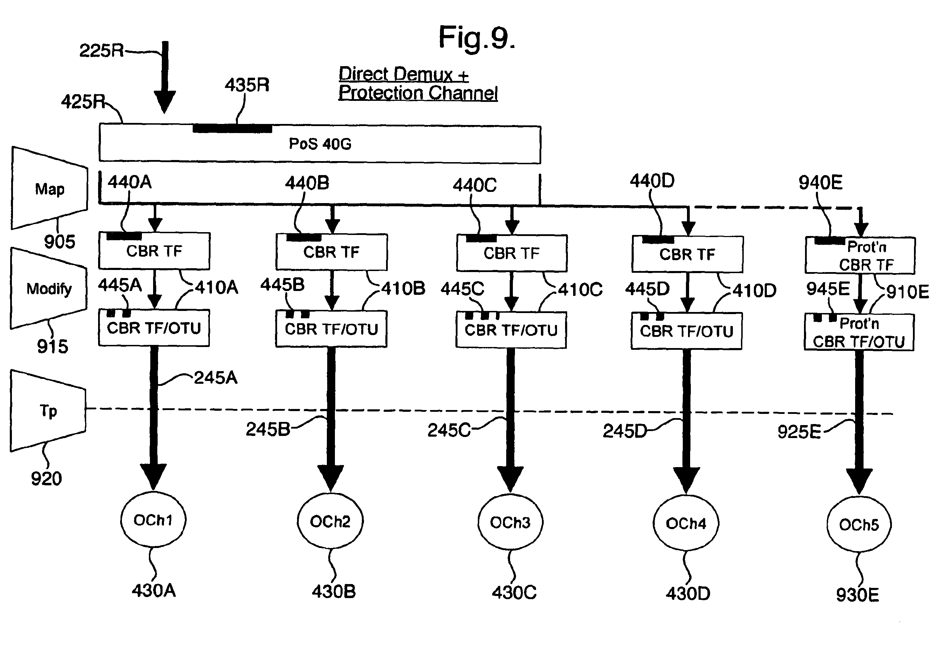

Figure 9 illustrates implementation of a protection channel. Typically the protection channel 930E will be implemented to carry a copy of one of the working channels 430A-D. This demultiplexing method operates in a similar manner to that described with respect to Figures 3 and 4. Additionally, a modified mapping function 905 maps some blocks of bytes from the client frame 425R into a protection CBR transport frame 910E. This corresponds to step 320 of Figure 3, and may be implemented by copying blocks of bytes 710A-D from one of the CBR transport frames 410A-D into the protection CBR transport frame 910E. A modified modify function 915 additionally modifies non-payload bytes 940E from the client frame in the protection CBR transport frame 910E to carry CBR transport frame control data 945E. The protection CBR transport frame 910E is converted into the optical domain by a five channel transponder 920 to create a protection signal 925E which is transmitted in parallel with the other CBR optical signals 245A-D over an optical protection channel 930E. Thus if the first optical channel 430A is protected, should this fail then the first CBR optical signal 245A can be recovered from the protection channel 930E. The protection signal 925E may be carried over any additional optical channel 930E, for example the OTN/WDM overhead channel.

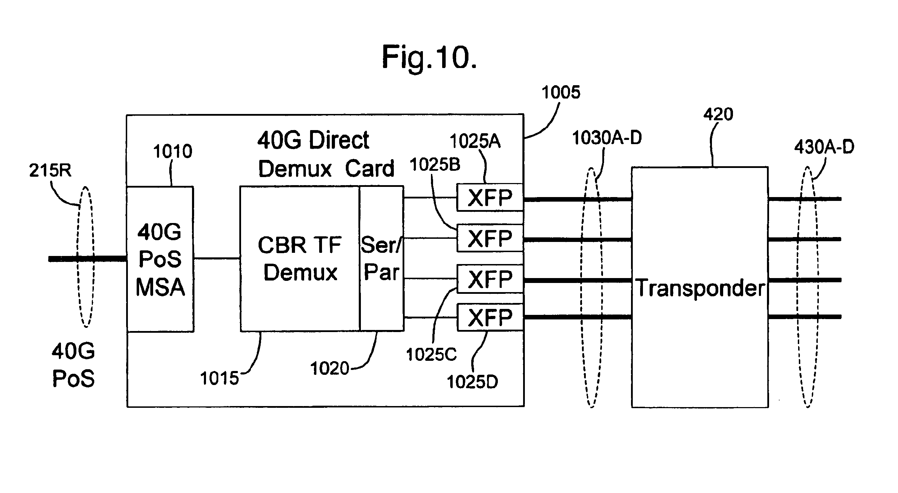

Referring to Figure 10, a transmitter 1005 for transmitting client data is shown and comprises apparatus for demultiplexing the client data 1015. This demultiplexing apparatus 1015 may be implemented using the method of Figure 3 and a Field Programmable Gate Array (FPGA). The transmitter 1005 comprises the apparatus for demultiplexing the client data 1015, which receives client frames from a multi-source agreement (MSA) interface 1010 coupled to the CBR optical client serial link 215R. The CBR transport frame demultiplexer 1015 outputs CBR transport frames 410A-D to a serial to parallel converter 1020, which outputs them to a number of grey optical transponders 1025A-D corresponding to the parallel optical channels 430A-D. The grey optical channels 1030A-D however, have the same wavelength and are output to a coloured or DWM transponder 420 which converts these grey channels 1030A-D into the multi-coloured channels 430A-D for transport over the core network 230.

In this implementation, the interface 1010, apparatus for demultiplexing 1015, serial to parallel converter 1020, and grey transponders 1025A-D, are implemented on a single card. The output from this card is then fed directly into an existing transponder 420 implemented on a separate card. Thus implementing the method of demultiplexing client data according to this embodiment is easily achieved with an additional card 1005 interfacing with a DWDM core network using existing 10G transponders 420. The transponders 420 perform wave division multiplexing and guarantee proper optical performance. Thus the plurality of optical channels is enveloped into a standard G.709 structure for coupling directly into optical add/drop filters. For simplicity of explanation, only an apparatus for demultiplexing client data has been illustrated. However, as the multiplexing method is the reverse of the demultiplexing method, the same hardware may be used for receiving the plurality of wavelength division multiplexed optical channels 430A-D, multiplexing these into a client frame, and transmitting this client frame over a second CBR optical client serial link 215T.

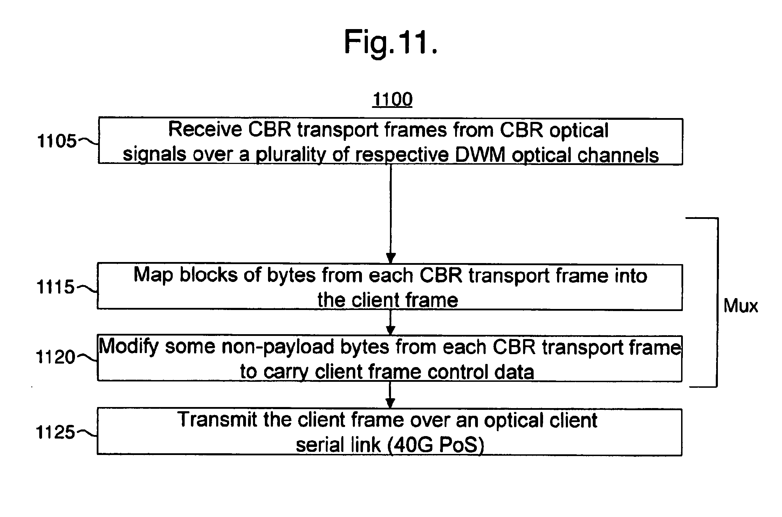

Figure 11 illustrates such a method of receiving and multiplexing a plurality of wavelength division multiplexed (WDM) optical channels 430A-D to a higher rate signal 225T for transmitting over a second CBR optical client serial link 215T. This multiplexing method may be implemented by the CBR transport frame multiplexer 245 of the core network 230. The multiplexing method may also be implemented by a combined CBR transport frame demultiplexer/multiplexer (235) for receiving signals originating from the second local network 210T to be transmitted over the first local network 210R. Similarly the CBR transport frame multiplexer 245 may implement the demultiplexing method when receiving client data from the second local network 210T.

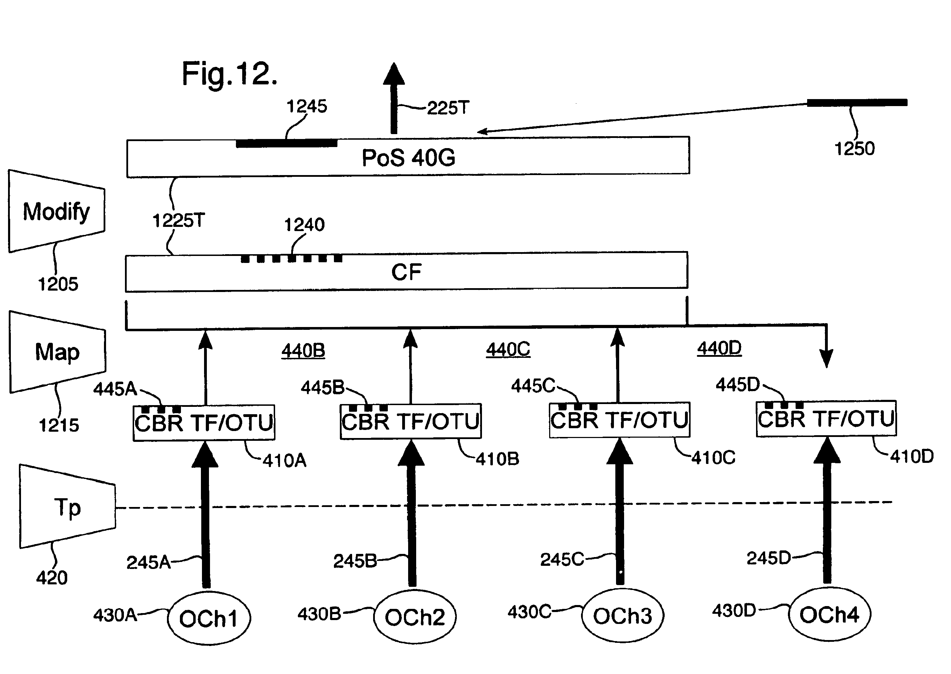

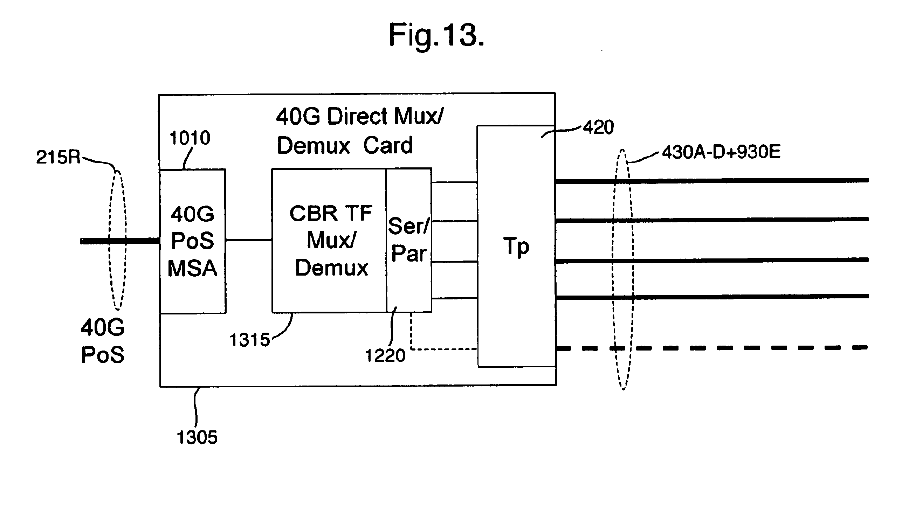

In the multiplexing method 1100, CBR transport frames 410A-D are received from CBR optical signals 245A-D over a plurality of respective WDM optical channels 430A-D at step 105. This step is illustrated in Figure 12 and may be implemented by a transponder 1025A-D, 420 as incorporated in the cards 1005 and 1305 of Figures 10 and 13 respectively. The CBR transport frame multiplexer then maps blocks of bytes from each CBR transport frame 410A-D into a client frame 1225T at step 1115. From Figure 12, it can be seen that non-payload bytes 445A-D from each CBR transport frame 410A-D are mapped into the client frame 1225R as non-payload bytes 1240. These non-payload bytes are the CBR transport frame control data 445A-D inserted by the demultiplexing method of Figure 3. The mapping of blocks of bytes from each CBR transport frame 410A-D to the client frame 1225T is performed by a mapping function 1215 which performs the reverse of the mapping performed by the demultiplexing method 300 or the CBR transport frame demultiplexer 235. In an embodiment, columns from each CBR transport frame 410A-D are mapped cyclically into the client frame 1225T. The multiplexer 245 then modifies the non-payload bytes 1240 in the client frame 1225T to carry client frame control data 1245 at step 1120. This step is performed by a modify function 1205 which restores the original state of the client frame 425R received by the demultiplexer 235. Where the frame alignment section or bytes of a 40G PoS frame was originally modified to carry the CBR transport frame control data 445A-D in the demultiplexing method, a copy or template 1250 of this frame alignment section can be taken from local memory and inserted into the client frame 1225T. This is possible because the frame alignment section 435R of a 40G PoS frame is defined by standard and therefore no information is required from the transmitting side (235). The modified or completed client frame 1225T is then transmitted as a higher rate signal 225T over the second CBR optical client serial link 215T at step 1125. This transmission function may be achieved by the 40G PoS MSA interface 1010 on the demultiplexer card 1005 operating in reverse.

Figure 13 illustrates an alternative embodiment multiplexer/demultiplexer card 1305. This card shows both the multiplexer and demultiplexer functions 1315 typically implemented in an FPGA. The card 1305 also comprises an optical client serial link interface 1010 for receiving and transmitting on the first or second optical client serial link 215R or 215T. The card 1305 also includes a serial to parallel converter 1020 and an onboard transponder 420. The transponder 420 sends and receives signals on multiple channels or wavelengths over the core network 230. This implementation avoids the need for an additional transponder card by utilising appropriately coloured XFP's. The card 1305 incorporates a suitable G.709 framer to accommodate the signals within the G.709 structure. Also illustrated and shown in dashed outline is a protection channel 930E requiring an extra XFP and typically carrying one of the worker channels 430A-D.

In order to accommodate differential delay due to chromatic dispersion, buffering may be implemented on the multiplexing card 1305. In order to minimise the buffering requirements and to avoid the need for an aliasing protocol, the optical channels 430A-D (and 930E when used) should be routed along the same optical pathway.

The embodiments provide a mechanism for migrating from 1OG data rate signals to 40G data rate signals where local networks and the core network operate at different rates. Compared with the OTN demultiplexing and multiplexing approach using digitally wrapped transport containers, the CBR TF multiplexing and demultiplexing approach of the embodiments reduces overhead processing and memory requirements particularly as 40G signals can be converted into 1OG WDM signals and vice versa without the need for digitally wrapping and hence extra overhead bytes. This reduces implementation complexity and cost. The embodiments can also make use of existing 10G OTN networks using any type of suitable 10G transponder in CBR mode.

Various modifications may be made to the described embodiments without departing from the scope of the invention as defined by the appended claims.

## Claims

1. A method of demultiplexing client data (545) from a constant bit rate (CBR) optical client serial link (215) into lower bit-rate CBR signals (245A-D) for transmitting over a plurality of wavelength division multiplexed (WDM) optical channels (430A-D); the method comprising:
mapping (315) blocks of bytes (510) from a client frame (425R) received from the optical client serial link (215R) into respective CBR transport frames (410A-D) for transmitting over the respective WDM optical channels (430A-D) and such that the number of bytes in the client frame (425R) is the same as the number of bytes in the plurality of respective CBR transport frames; (410A-D); and
modifying (325) a number of non-payload bytes (435, 525) from the client frame (425R) to carry CBR transport frame control data (445A-D) in each said CBR transport frame (410A-410D).

2. A method as claimed in claim 1, using four CBR transport frames (410A-D) for each client frame (425R), the client frame being an STM-265/OC-768 bit-rate signal and the CBR transport frames each having an STM-64/OC-192 signal bit-rate.

3. A method as claimed in claim 1 or 2, wherein the client frame (425R) is a 40G Packet over SONET (PoS) frame, and the non payload bytes (435) are the frame alignment bytes (530) of the 40G PoS frame.

4. A method as claimed in any one preceding claim, further comprising:
transmitting (330) the CBR transport frames (410A-D) as parallel CBR optical signals (425A-D) over the plurality of wavelength division multiplexed (WDM) optical channels (430A-D) of the WDM network (230) such that the bit-rate of the optical client serial link (215R) is equal to the combined bit-rates of the plurality of WDM optical channels (430A-D).

5. A method as claimed in claim 4, further comprising implementing a protection optical channel (930E) by transmitting one of the CBR transport frames (410A-D) additionally as a CBR protection optical signal (925E) over a WDM protection optical channel (930E) of the WDM network (230).

6. A method as claimed in claim 5, wherein the WDM network (230) is an OTN network and the WDM protection optical channel (930E) is the overhead optical channel of the OTN WDM network.

7. A method as claimed in claim 5 or 6, wherein the CBR transport frame control data (445A-D) comprises an indication of the status (800b3) of the WDM protection optical channel (930E).

8. A method of multiplexing client data (545) from a plurality of wavelength division multiplexed (WDM) optical channels (430A-D) to a higher bit-rate signal (225T) for transmitting over a constant bit rate (CBR) optical client serial link (215T); the method comprising:
mapping (1115) blocks of bytes (710A-D) from a CBR transport frame (410A-D) received from each WDM optical channel (430A-D) into a client frame (1225T) such that the number of bytes in the plurality of respective CBR transport frames (410A-D) is equal to the number of bytes in the client frame (1225T); and
modifying (1120) a number of non-payload bytes (445A-D) from the CBR transport frames (410A-D) to carry client frame control data (1245).

9. A method as claimed in claim 8, using four CBR transport frames (410A-D) for mapping blocks of bytes (710A-D) to each client frame (1225T), the client frame being an STM-265/OC-768 bit-rate signal and the CBR transport frames each having an STM-64/OC-192 signal bit-rate.

10. A method as claimed in claim 8 or 9, wherein the client frame (1225T) is a 40G Packet over SONET (PoS) frame, and the client frame control data (1245) are the frame alignment bytes (530) of the 40G PoS frame.

11. A method as claimed in claim 12, wherein the frame alignment bytes (530) are regenerated from a stored template (1250).

12. Apparatus for demultiplexing client data received from a constant bit rate (CBR) optical client serial link (215T) into lower bit-rate signals (425A-D) for transmitting over a plurality of wavelength division multiplexed (WDM) optical channels (430A-D); the apparatus (1005) comprising a processor (1015) arranged to: map blocks of bytes (510) from a client frame (425R) received from the optical client serial link (215R) into respective CBR transport frames (410A-D) for transmitting over the respective WDM optical channels (430A-D) such that the number of bytes in the client frame is the same as the number of bytes in the plurality of respective CBR transport frames; and modify a number of non-payload bytes (435R) from the client frame to carry CBR transport frame control data (445A-D) in each said CBR transport frame (410A-D).

13. An apparatus for demultiplexing as claimed in claim 12, the processor further arranged to use four CBR transport frames (410A-D) for each client frame (425R), the client frame being an STM-265/OC-768 bit-rate signal and the CBR transport frames each having an STM-64/OC-192 signal bit-rate.

14. An apparatus for demultiplexing as claimed in claim 12 or 13, wherein the client frame (425R) is a 40G Packet over SONET (PoS) frame, and the non payload bytes (435) are the frame alignment bytes (530) of the 40G PoS frame.

15. An apparatus for demultiplexing as claimed in any one of claims 12 to 14, the apparatus further comprising a transmitter (135) arranged to transmit (330) the CBR transport frames (410A-D) as parallel CBR optical signals (425A-D) over the plurality of wavelength division multiplexed (WDM) optical channels (430A-D) of the WDM network (230) such that the bit-rate of the optical client serial link (215R) is equal to the combined bit-rates of the plurality of WDM optical channels (430A-D).

16. An apparatus for demultiplexing as claimed in claim 15, the apparatus further arranged to implement a protection optical channel (930E) by transmitting one of the CBR transport frames (410A-D) additionally as a CBR protection optical signal (925E) over a WDM protection optical channel (930E) of the WDM network (230).

17. Apparatus for multiplexing client data received from a plurality of wavelength division multiplexed (WDM) optical channels to a higher bit-rate signal for transmitting over a constant bit rate (CBR) optical client serial link; the apparatus (1305) comprising a processor (1315) arranged to: map blocks of bytes (710A-D) from a CBR transport frame (410A-D) received from each WDM optical channel (430A-D) into a client frame (1225T) for carrying over the optical client serial link (215T) and such that the number of bytes in the plurality of respective CBR transport frames is the same as the number of bytes in the client frame; and modify a number of non-payload bytes (445A-D) from the CBR transport frames (410A-D) to carry client frame control data (1245).

## Patentansprüche

1. Verfahren zum Demultiplexen von Client-Daten (545) von einer seriellen Verbindung (215) eines optischen Clients mit konstanter Bitrate (CBR) in CBR-Signale (245A-D) mit niedrigerer Bitrate zum Senden über eine Mehrzahl Von wellenlängengemultiplexten (WDM) optischen Kanälen (430A-D); wobei das Verfahren umfasst:
Abbilden (315) von Blöcken von Bytes (510) aus einem Client-Rahmen (425R), der von der seriellen Verbindung (215R) des optischen Clients empfangen werden, in jeweilige CBR-Transportrahmen (410A-D) zum Senden über die jeweiligen optischen WDM-Kanäle (430A-D) und derart, dass die Anzahl von Bytes im Client-Rahmen (425R) gleich wie die Anzahl von Bytes in der Mehrzahl von jeweiligen CBR-Transportrahmen (410A-D) ist; und
Modifizieren (325) einer Anzahl von Nicht-Nutzlast-Bytes (435, 525) aus dem Client-Rahmen (425R), um CBR-Transportrahmensteuerdaten (445A-D) in jedem CBR-Transportrahmen (410A-410D) mitzuführen.

2. Verfahren nach Anspruch 1, wobei vier CBR-Transportrahmen (410A-D) für jeden Client-Rahmen (425R) verwender werden, wobei der Client-Rahmen ein Signal mit einer STM-265/OC-768-Bitrate ist und die CBR-Transportrahmen jeweils eine STM-64/OC-192-Signalbitrate aufweisen.

3. Verfahren nach Anspruch 1 oder 2, wobei der Client-Rahmen (425R) ein 40G-Paket-über-SONET (PoS)-Rahmen ist, und die Nicht-Nutzlast-Bytes (435) die Rahmensynchronisierungsbytes (530) des 40G-PoS-Rahmens sind.

4. Verfahren nach einem der vorhergehenden Ansprüche, ferner umfassend:
Senden (330) der CBR-Transportrahmen (410A-D) als parallele optische CBR-Signale (425A-D) über die Mehrzahl von wellenlängengemultiplexten (WDM) optischen Kanälen (430A-D) des WDM-Netzes (230), derart dass die Bitrate der seriellen Verbindung (215R) des optischen Clients gleich den kombinierten Bitraten der Mehrzahl von optischen WDM-Kanälen (430A-D) ist.

5. Verfahren nach Anspruch 4, ferner umfassend ein Implementieren eines optischen Schutzkanals (930E) durch Senden eines der CBR-Transportrahmen (410A-D) zusätzlich als ein optisches CBR-Schutzsignal (925E) über einen optischen WDM-Schutzkanal (930E) des WDM-Netzes (230).

6. Verfahren nach Anspruch 5, wobei das WDM-Netz (230) ein OTN-Netz ist, und der optische WDM-Schutzkanal (930E) der optische Overhead-Kanal des OTN-WDM-Netzes ist.

7. Verfahren nach Anspruch 5 oder 6, wobei die CBR-Transportrahmensteuerdaten (445A-D) eine Anzeige des Status (800b3) des optischen WDM-Schutzkanals (930E) umfassen.

8. Verfahren zum Multiplexen von Client-Daten (545) aus einer Mehrzahl von wellenlängengemultiplexten (WDM) optischen Kanälen (430A-D) in ein Signal (225T) mit höherer Bitrate zum Senden über eine serielle Verbindung (215T) eines optischen Clients mit konstanter Bitrate (CBR); wobei das Verfahren umfasst:
Abbilden (1115) von Blöcken von Bytes (710A-D) aus einem CBR-Transportrahmen (410A-D), der Von jedem optischen WDM-Kanal (430A-D) empfangen wird, in einen Client-Rahmen (1225T), derart dass die Anzahl von Bytes in der Mehrzahl von jeweiligen CBR-Transportrahmen (410A-D) gleich der Anzahl von Bytes im Client-Rahmen (1225T) ist; und
Modifizieren (1120) einer Anzahl von Nicht-Nutzlast-Bytes (445A-D) aus den CBR-Transportrahmen (410A-D), um Client-Rahmensteuerdaten (1245) mitzuführen.

9. Verfahren nach Anspruch 8, wobei vier CBR-Transportrahmen (410A-D) zum Abbilden von Blöcken von Bytes (710A-D) auf jeden Client-Rahmen (1225T) verwender werden, wobei der Client-Rahmen ein Signal mit einer STM-265/OC-768-Bitrate ist und die CBR-Transportrahmen jeweils eine STM-64/OC-192-Signalbitrate aufweisen.

10. Verfahren nach Anspruch 8 oder 9, wobei der Client-Rahmen (1225T) ein 40G-Paket-über-SONET (PoS)-Rahmen ist, und die Client-Rahmensteuerdaten (1245) die Rahmensynchronisierungsbytes (530) des 40G-PoS-Rahmens sind.

11. Verfahren nach Anspruch 12, wobei die Rahmensynchronisierungsbytes (530) aus einer gespeicherten Vorlage (1250) regeneriert werden.

12. Vorrichtung zum Demultiplexen von Client-Daten, die von einer seriellen Verbindung (215T) eines optischen Clients mit konstanter Bitrate (CBR) empfangen werden, in Signale (425A-D) mit niedrigerer Bitrate zum Senden über eine Mehrzahl von wellenlängengemultiplexten (WDM) optischen Kanälen (430A-D); wobei die Vorrichtung (1005) einen Prozessor (1015) umfasst, der ausgelegt ist zum: Abbilden von Blöcken von Bytes (510) aus einem Client-Rahmen (425R), der von der seriellen Verbindung (215R) des optischen Clients empfangen wird, in jeweilige CBR-Transportrahmen (410A-D) zum Senden über die jeweiligen optischen WDM-Kanäle (430A-D), derart dass die Anzahl von Bytes im Client-Rahmen gleich wie die Anzahl von Bytes in der Mehrzahl von jeweiligen CBR-Transportrahmen ist; und Modifizieren einer Anzahl von Nicht-Nutzlast-Bytes (435R) aus dem Client-Rahmen, um CBR-Transportrahmensteuerdaten (445A-D) in jedem der CBR-Transportrahmen (410A-410D) mitzuführen.

13. Vorrichtung zum Demultiplexen nach Anspruch 12, wobei der Prozessor ferner so ausgelegt ist, dass er vier CBR-Transportrahmen (410A-D) für jeden Client-Rahmen (425R) verwender, wobei der Client-Rahmen ein Signal mit einer STM-265/OC-768-Bitrate ist und die CBR-Transportrahmen jeweils eine STM-64/OC-192-Signalbitrate aufweisen.

14. Vorrichtung zum Demultiplexen nach Anspruch 12 oder 13, wobei der Client-Rahmen (425R) ein 40G-Paket-über-SONET (PoS)-Rahmen ist, und die Nicht-Nutzlast-Bytes (435) die Rahmensynchronisierungsbytes (530) des 40G-PoS-Rahmens sind.

15. Vorrichtung zum Demultiplexen nach einem der Ansprüche 12 bis 14, wobei die Vorrichtung ferner einen Sender (135) umfasst, der so ausgelegt ist, dass er die CBR-Transportrahmen (410A-D) als parallele optische CBR-Signale (425A-D) über die Mehrzahl von wellenlängengemultiplexten (WDM) optischen Kanälen (430A-D) des WDM-Netzes (230) sendet, derart dass die Bitrate der seriellen Verbindung (215R) des optischen Clients gleich den kombinierten Bitraten der Mehrzahl von optischen WDM-Kanälen (430A-D) ist.

16. Vorrichtung zum Demultiplexen nach Anspruch 15, wobei die Vorrichtung ferner so ausgelegt ist, dass sie einen optischen Schutzkanal (930E) durch Senden eines der CBR-Transportrahmen (410A-D) zusätzlich als ein optisches CBR-Schutzsignal (925E) über einen optischen WDM-Schutzkanal (930E) des WDM-Netzes (230) implementiert.

17. Vorrichtung zum Multiplexen von Client-Daten, die von einer Mehrzahl von wellenlängengemultiplexten (WDM) optischen Kanälen empfangen werden, in ein Signal mit höherer Bitrate zum Senden über eine serielle Verbindung eines optischen Clients mit konstanter Bitrate; wobei die Vorrichtung (1305) einen Prozessor (1315) umfasst, der ausgelegt ist zum: Abbilden von Blöcken Von Bytes (710A-D) aus einem CBR-Transportrahmen (410A-D), der von jedem optischen WDM-Kanal (430A-D) empfangen wird, in einen Client-Rahmen (1225T), derart dass die Anzahl von Bytes in der Mehrzahl von jeweiligen CBR-Transportrahmen gleich der Anzahl von Bytes im Client-Rahmen ist; und Modifizieren einer Anzahl von Nicht-Nutzlast-Bytes (445A-D) aus den CBR-Transportrahmen (410A-D), um Client-Rahmensteuerdaten (1245) mitzuführen.

## Revendications

1. Procédé de démultiplexage de données client (545) provenant d'une liaison sérielle client optique (215) à débit constant (CBR) en signaux à débit CBR plus bas (245A-D) en vue d'une transmission sur une pluralité de canaux optiques (430A-D) à multiplexage par répartition en longueur d'onde (WDM) ; le procédé comprenant de :
mettre en correspondance (315) des blocs d'octets (510) provenant d'une trame client (425R) reçue de la liaison sérielle client optique (215R) avec des trames de transport CBR respectives (410A-D) en vue d'une transmission sur les canaux optiques WDM respectifs (430A-D) et de sorte que le nombre d'octets dans la trame client (425R) soit le même que le nombre d'octets dans la pluralité de trames de transport CBR respectives (410A-D) ; et
modifier (325) un nombre d'octets de non charge utile (435,525) provenant de la trame client (425R) pour transporter des données de commande de trame de transport CBR (445A-D) dans chaque dite trame de transport CBR (410A-410D).

2. Procédé selon la revendication 1, utilisant quatre trames de transport CBR (410A-D) pour chaque trame client (425R), la trame client étant un signal à débit STM-265/OC-768 et les trames de transport CBR ayant chacune un débit de signaux STM-64/OC-192.

3. Procédé selon la revendication 1 ou 2, dans lequel la trame client (425R) est une trame paquet sur SONET (PoS) 40G, et les octets de non charge utile (435) sont les octets d'alignement de trame (530) de la trame PoS 40G.

4. Procédé selon une quelconque des revendications précédentes, comprenant en outre de :
transmettre (330) les trames de transport CBR (410A-D) comme des signaux optiques CBR parallèles (425A-D) sur la pluralité de canaux optiques (430A-D) multiplexés par répartition en longueur d'onde (WDM) du réseau WDM (230) de sorte que le débit de la liaison sérielle de client optique (215R) soit égal aux débits combinés de la pluralité de canaux optiques WDM (430A-D).

5. Procédé selon la revendication 4, comprenant en outre d'implémenter un canal optique de protection (930E) en transmettant une des trames de transport CBR (410A-D) additionnellement comme un signal optique de protection CBR (925E) sur un canal optique de protection WDM (930E) du réseau WDM (230).

6. Procédé selon la revendication 5, dans lequel le réseau WDM (230) est un réseau OTNet le canal optique de protection WDM (930E) est le canal optique de préfixe du réseau WDM OTN.

7. Procédé selon la revendication 5 ou 6, dans lequel les données de commande de trame de transport CBR (445A-D) comprennent une indication du statut (800b3) du canal optique de protection WDM (930E).

8. Procédé de multiplexage de données client (545) provenant d'une pluralité de canaux optiques (430A-D) multiplexés par répartition en longueur d'onde (WDM) en un signal à plus haut débit (225T) en vue d'une transmission sur une liaison sérielle de client optique (215T) à débit constant (CBR) ; le procédé comprenant de :
mettre en correspondance (1115) des blocs d'octets (710A-D) provenant d'une trame de transport CBR (410AD) reçue depuis chaque canal optique WDM (430A-D) avec une trame client (1225T) de sorte que le nombre d'octets dans la pluralité de trames de transport CBR respectives (410A-D) soit égal au nombre d'octets dans la trame client (1225T) ; et
modifier (1120) un nombre d'octets de non charge utile (445A-D) provenant des trames de transport CBR (410AD) pour transporter des données de commande de trame client (1245).

9. Procédé selon la revendication 8, utilisant quatre trames de transport CBR (410A-F) pour mettre en correspondance des blocs d'octets (710A-D) avec chaque trame client (1225T), la trame client étant un signal à débit STM-265/OC-768 et les trames de transport CBR ayant chacune un débit de signaux STM-64/OC-192.

10. Procédé selon la revendication 8 ou 9, dans lequel la trame client (1225T) est une trame paquet sur SONET (PoS) 40G, et les données de commande de trame client (1245) sont les octets d'alignement de trame (530) de la trame PoS 40G.

11. Procédé selon la revendication 12, dans lequel les octets d'alignement de trame (530) sont régénérés d'après un modèle mémorisé (1250).

12. Appareil de démultiplexage de données client reçues en provenant d'une liaison sérielle client optique (215T) à débit (CBR) constant en signaux à débit plus bas (425A-D) en vue d'une transmission sur une pluralité de canaux optiques (430A-D) multiplexés par répartition en longueur d'onde (WDM) ; l'appareil (1005) comprenant un processeur (1015) agencé pour :
mettre en correspondance des blocs d'octets (510) provenant d'une trame client (425R) reçus de la liaison sérielle client optique (215R) avec des trames de transport CBR respectives (410A-D) en vue d'une transmission sur les canaux optiques WDM respectifs (430A-D) de sorte que le nombre d'octets dans la trame client soit le même que le nombre d'octets dans la pluralité de trames de transport CBR respectives ; et modifier un nombre d'octets de non charge utile (435R) provenant de la trame client pour transporter des données de commande de trame de transport (445A-D) dans chaque dite trame de transport CBR (410A-D).

13. Appareil de démultiplexage selon la revendication 12, le processeur étant en outre agencé pour utiliser quatre trames de transport CBR (410A-D) pour chaque trame client (425R), la trame client étant un signal à débit STM-265/OC-768 et les trames de transport CBR ayant chacune un débit de signal STM-64/OC-192.

14. Appareil de démultiplexage selon la revendication 12 ou 13, dans lequel la trame client (425R) est une trame paquet sur SONET (PoS) 40G, et les octets de non charge utile (435) sont les octets d'alignement de trame (530) de la trame PoS 40G.

15. Appareil de démultiplexage selon une quelconque des revendications 12 à 14, l'appareil comprenant en outre un émetteur (135) agencé pour mettre (330) les trames de transport CBR (410A-D) comme des signaux optiques CBR parallèles (425A-D) sur la pluralité de canaux optiques (430A-D) multiplexés par répartition en longueur d'onde (WDM) du réseau WDM (230) de sorte que le débit de la liaison sérielle client optique (215R) soit égal aux débits combinés de la pluralité de canaux optiques WDM (430A-D).

16. Appareil de démultiplexage selon la revendication 15, l'appareil étant en outre agencépour implémenter un canal optique de protection (930E) en émettant une des trames de transport CBR (410A-D) additionnellement comme un signal optique de protection CBR (925E) sur un canal optique de protection WDM (930E) du réseau WDM (230).

17. Appareil de multiplexage de données client reçues en provenance d'une pluralité de canaux optiques multiplexés par répartition en longueur d'onde (WDM) en un signal à débit plus élevé en vue d'une émission sur une liaison sérielle client optique à débit (CBR) constant ; l'appareil (1305) comprenant un processeur (1315) agencé pour : mettre en correspondance des blocs d'octets (710A-D) depuis une trame de transport CBR (410A-D) reçue de chaque canal optique WDM (430AD) sur une trame client (1225T) en vue d'un transport sur la liaison sérielle client optique (215T) et de sorte que le nombre d'octets dans la pluralité de trames de transport CBR respectives soit le même que le nombre d'octets dans la trame client ; et modifier un nombre d'octets de non charge utile (445A-D) provenant des trames de transport CBR (410A-D) pour transporter des données de commande de trame client (1245).
